# FASCICULE DE BREVET EUROPEEN

(11) **EP 3 402 158 B1**
(45) Date de publication et mention de la délivrance du brevet: **08.04.2020**
(21) Numéro de dépôt: 18171892.5
(22) Date de dépôt: 11.05.2018
(51) Int. Cl.: H04L 29/06, G08G 5/00, H04L 29/08, H04W 4/48

(54) **PASSERELLE DE SÉCURITÉ AVIONIQUE AMÉLIORÉE ET AERONEF COMPORTANT UNE TELLE PASSERELLE**
VERBESSERTES SICHERHEITSGATEWAY FÜR FLUGZEUG, UND LUFTFAHRZEUG, DAS EIN SOLCHES GATEWAY UMFASST
IMPROVED AVIONICS SECURITY GATEWAY AND AIRCRAFT COMPRISING SUCH A GATEWAY

(30) Priorité: 11.05.2017 FR 1700505
(43) Date de publication de la demande: 14.11.2018
(73) Titulaire: THALES, 92400 Courbevoie (FR)
(72) Inventeur: RAYROLE, Martin, 78140 VELIZY-VILLACOUBLAY (FR); FAURA, David, 78140 VELIZY VILLACOUBLAY (FR); GATTI, Marc, 33608 PESSAC (FR)
(74) Mandataire: Lavoix

(56) Documents cités:
- WO-A1-2016/154036
- WO-A2-2008/005858
- US-A1- 2013 031 543
- US-B2- 8 397 286

## Description

L'invention a pour domaine celui des passerelles de sécurité avioniques, c'est-à-dire destinées à être embarquées à bord d'un aéronef, civil ou militaire.

L'architecture d'une installation informatique avionique est constituée par l'interconnexion de plusieurs équipements via des réseaux de communication avioniques, qui peuvent avoir des niveaux de criticité différents entre eux. Au point d'interconnexion entre deux réseaux de communication, l'installation comporte une passerelle de sécurité avionique permettant de protéger l'installation contre des attaques informatiques malveillantes.

De nombreux travaux sont actuellement menés pour améliorer les services de sécurité fournis par de telles passerelles. Cependant, ces travaux consistent à adapter au domaine avionique, les algorithmes de sécurité existants dans le domaine de l'informatique et des télécommunications, c'est-à-dire pour protéger des installations non-embarquées.

Or, le fait que l'installation à protéger soit embarquée impose de nombreuses contraintes, notamment en termes de volume, poids et consommation électrique. Il est donc souhaitable qu'une passerelle de sécurité avionique contienne le minimum nécessaire de ressources, en particulier en termes de puissance de calcul et de taille mémoire.

L'approche faite dans le cadre d'installations non-embarquées pour lesquelles la ressource informatique disponible est extensible consiste à exécuter, à chaque instant, un ensemble d'algorithmes de sécurité de manière à se prémunir de toutes les attaques informatiques redoutées. Le même ensemble d'algorithmes est donc exécuté durant toute la durée opérationnelle de la passerelle.

Cette approche ne cherche pas à réduire les ressources contenues dans une passerelle de sécurité, et elle est donc peu adaptée au contexte d'installations embarquées.

Par ailleurs, les systèmes avioniques existants n'utilisent pas ou utilisent peu de fonctions de sécurité, car les équipements avioniques critiques sont physiquement isolés du reste de l'installation de l'aéronef. Cependant, l'évolution actuelle de l'aéronautique tend à augmenter les interactions entre les équipements avioniques critiques et d'autres équipements, internes ou externes à l'aéronef. L'utilisation de passerelles avioniques de sécurité devient alors indispensable.

Le document US 8 397 286 B2 divulgue une plate-forme propre, le long d'un canal montant entre un réseau de niveau de sécurité bas vers un réseau de niveau de sécurité haut : à convertir un paquet entrant au format Ethernet selon un protocole propriétaire réalisant un étiquetage des données à transmettre ; à filtrer les données en fonction de l'étiquette qui leur a été attribuée ; et reconstruire des paquets sortant au format Ethernet à partir des données filtrées. Les règles de filtrage appliquées par le pare-feu peuvent dépendre d'un état de l'aéronef (par exemple « en vol » ou « au sol ») en indiquant la liste des étiquettes à bloquer pour tel ou tel état de fonctionnement.

Le document WO 2016/154036 A1 divulgue une passerelle pouvant être programmée au moyen d'un ensemble de règles de gestion des messages transitant sur cette passerelle. La passerelle peut être configurée au moyen d'un fichier téléchargeable qui définit l'ensemble des règles à exécuter.

L'invention a donc pour but de répondre à ce problème, notamment en cherchant à réduire la quantité de ressources nécessaires à une passerelle de sécurité avionique.

Pour cela l'invention a pour objet une passerelle de sécurité avionique et un aéronef selon les revendications annexées.

L'invention et ses avantages seront mieux compris à la lecture de la description détaillée qui va suivre d'un mode de réalisation particulier, donné uniquement à titre d'exemple illustratif et non limitatif, la description étant faite en se référant aux dessins annexés sur lesquels :
- la figure 1 est une représentation schématique sous forme de blocs d'un mode de réalisation préféré de la passerelle de sécurité avionique selon l'invention ; et,
- la figure 2 est une représentation schématique sous forme de blocs d'un procédé mis en œuvre par la passerelle de la figure 1.

De manière générale, l'invention vise à adapter dynamiquement la politique de sécurité, c'est-à-dire à adapter les algorithmes de sécurité exécutés par une passerelle de sécurité avionique et/ou leur contexte d'exécution en fonction de l'état de l'avion à bord duquel est embarquée la passerelle.

L'invention tire profit de certaines spécificités de l'avionique critique, notamment de la configuration statique des canaux de communication, définie lors de la conception de l'avion. On connait donc à l'avance, en fonction de l'état de l'avion, les caractéristiques de chaque canal de communication traversant une passerelle : profil du trafic, type des données transmises, etc. La politique de sécurité à mettre en œuvre utilise cette connaissance du trafic normal sur un canal pour le surveiller de manière adaptée.

A l'instant courant, il n'est donc pas nécessaire d'exécuter un grand nombre d'algorithmes de sécurité génériques ou d'allouer le même temps de calcul à chacun d'entre eux dans le but d'être capable de détecter tout type d'attaque informatique, mais de mettre en œuvre, en fonction de la situation opérationnelle, des algorithmes adaptés et de leur allouer les ressources informatiques adaptées au risque courant.

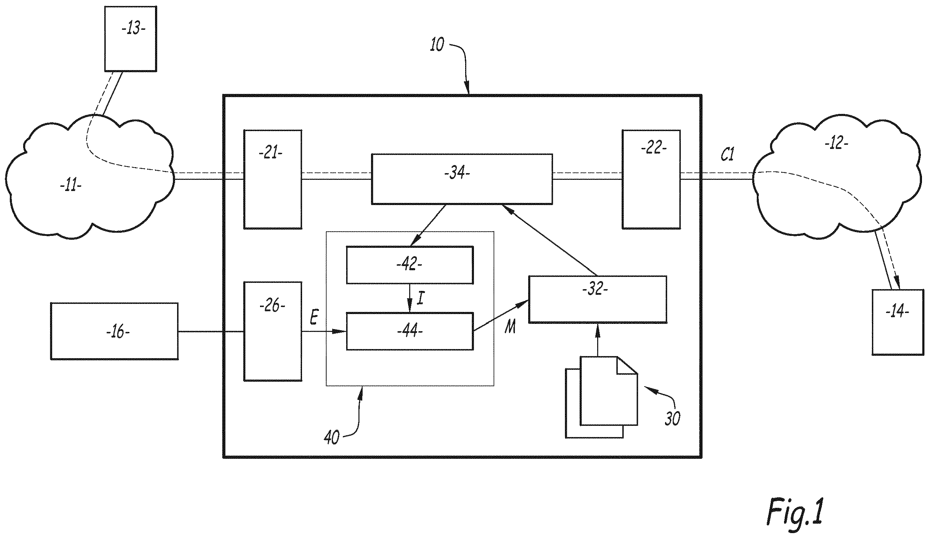

En se référant à la figure 1, un mode de réalisation préféré d'une passerelle de sécurité avionique selon l'invention va être présenté.

La passerelle de sécurité avionique 10 est un équipement informatique comportant un ou plusieurs processeur(s) ; une mémoire non volatile pour stocker notamment un système d'exploitation, des programmes informatiques à exécuter et une table de configuration ; de préférence, une mémoire volatile pour l'exécution des programmes informatiques par le ou les processeur(s) et des interfaces électroniques d'entrée/sortie pour la connexion de la passerelle notamment vers des réseaux de communication avioniques et vers des interfaces de l'avion.

Les modules fonctionnels décrits ci-dessous sont codés sous forme de programmes informatiques propres à être exécutés par la passerelle 10.

La passerelle 10 est placée en coupure entre un premier réseau 11 et un second réseau 12. L'ensemble des messages échangés entre les premier et second réseaux de communication passent donc à travers la passerelle 10.

La passerelle 10 est propre à surveiller chaque canal de communication entre les premier et second réseaux, 11 et 12

Un canal est ici défini comme la donnée d'une adresse d'un équipement émetteur sur un réseau, la donnée de l'adresse d'un équipement destinataire sur l'autre réseau et du protocole utilisé pour la communication entre ces deux équipements.

Les canaux entre les premier et second réseaux de communication sont prédéfinis et statiques au cours du fonctionnement de la passerelle 10 et de l'aéronef qu'elle équipe.

Ainsi la passerelle 10 surveille par exemple le canal de communication C1 entre un premier équipement informatique 13, émetteur, connecté au premier réseau 11 et un second équipement informatique 14, destinataire, connecté au second réseau 12. Le protocole est par exemple le protocole simple de gestion de réseau SNMP, le protocole simplifié de transfert de données TFTP ou encore le protocole de message de contrôle sur Internet ICMP, protocoles connus de l'homme du métier.

Comme représenté sur la figure 1, la passerelle 10 comporte une première interface 21, connectée au premier réseau 11, et une seconde interface 22, connectée au second réseau 12.

Une interface permet l'émission et/ou la réception de l'ensemble du trafic vers ou en provenance du réseau de communication correspondant.

En particulier, une interface permet, lors de la réception d'un message depuis le réseau de communication correspondant, d'identifier le canal associé à ce message. Il est en effet connu, par exemple dans un message respectant le protocole de communication Ethernet, d'indiquer dans une partie d'en-tête de ce message l'adresse de l'équipement émetteur, l'adresse de l'équipement destinataire et le protocole de communication utilisé. A partir de ces métadonnées, l'interface est propre à identifier le canal associé.

L'interface place alors le message dans la file de données d'entrée qui correspond au canal identifié.

La première interface est reliée à la seconde interface au travers d'un sous-module 34 de traitement, propre à surveiller le contenu circulant sur chaque canal de communication entre les premier et second réseaux.

Pour un canal particulier, le sous-module 34 est propre à mettre en œuvre au moins un algorithme de sécurité. Dans ce qui suit, pour simplifier la description, un unique algorithme est mis en œuvre. Il peut s'agir par exemple d'un algorithme « Data Origin Authentication HMAC », ou encore d'un algorithme « Authenticated Encryption », algorithmes de sécurité connus de l'homme du métier. De préférence, l'algorithme mis en œuvre correspond à l'état de l'art dans le domaine de la sécurité des réseaux.

L'algorithme mis en œuvre pour surveiller un canal à un instant donné résulte de la configuration d'un algorithme générique au moyen de la donnée de la valeur d'un ou plusieurs paramètres intrinsèques de configuration.

Le sous-module 34 exécute les différents algorithmes en assurant un cloisonnement spatial et temporel strict permettant d'isoler le traitement du flux de données d'un canal de celui des autres canaux. Ce cloisonnement est par exemple implémenté en tirant bénéfice des possibilités offertes par la norme ARINC A653. Le système d'exploitation exécuté sur la passerelle 10 permet de réaliser un partitionnement spatial (espace de la mémoire de la passerelle 10 alloué à l'exécution de l'algorithme associé à un canal) et temporel (durée d'allocation de la capacité de calcul de la passerelle 10 pour exécuter l'algorithme associé à un canal).

La partition pour l'exécution d'un algorithme mis en œuvre pour surveiller un canal est configurée dynamiquement au moyen de la donnée de la valeur d'un ou plusieurs paramètres extrinsèques de configuration.

Lors de son exécution, la partition lit les données présentes dans la file de données d'entrée du canal associé, traite les données lues en exécutant l'algorithme et les place dans une file de données de sortie.

L'interface vers le réseau de l'équipement destinataire est propre à lire les données sur la file de données de sortie et à les transmettre sur le réseau vers l'équipement destinataire.

Avantageusement, dans le mode de réalisation présenté ici en détail, le sous-module 34 est propre à dupliquer le flux de données d'un certain nombre de canaux indiqués dans une liste de canaux à analyser, et à transmettre le flux de données dupliqué vers un bloc 42 d'analyse du trafic, qui sera décrit ci-après. De préférence, la liste des canaux à analyser est une donnée statique.

La passerelle 10 comporte un sous-module 26 de supervision de l'état de l'avion.

Le sous-module 26 est destiné à être connecté à au moins une interface 16 de l'avion, externe à la passerelle 10, de manière à recevoir différents indicateurs relatifs à l'état de l'avion, de ladite au moins une interface 16.

Le sous-module 26 est propre, à partir de ces indicateurs, à déterminer un état courant E de l'avion. Par exemple, cet état courant peut prendre la valeur « en vol » ou la valeur « au sol » : l'état « en vol » indique que l'avion est en vol ou, avant le décollage ou après l'atterrissage, que l'avion est en phase de roulement sur une piste ; l'état « au sol » indique que l'avion est à l'arrêt et est susceptible de faire l'objet d'opérations de maintenance.

De préférence, la passerelle 10 n'utilise pas directement l'état courant E pour définir la politique de sécurité à mettre en œuvre, mais un mode de fonctionnement courant M qui dépend au moins de l'état courant E et éventuellement d'autres informations opérationnelles.

La passerelle 10 comporte un sous-module 40 d'identification du mode de fonctionnement courant M de la passerelle de sécurité 10.

Ce sous-module 40 comporte un bloc 42 d'analyse du trafic et un bloc 44 de calcul du mode de fonctionnement.

Le bloc 42 d'analyse du trafic reçoit en entrée le flux de données dupliqué par le sous-module 34 de traitement pour les canaux de la liste de canaux.

Le bloc 42 est propre à analyser les données de chacun des canaux reçus pour détecter certains évènements caractéristiques. Par exemple, le bloc 42 peut être configuré pour analyser le trafic passant sur un canal dédié au téléchargement d'informations conforme à la norme ARINC 615-A. Cette analyse menée par le bloc 42 permet de reconnaître des commandes ARINC 615-A caractéristiques de ce protocole et par exemple de détecter les évènements caractéristiques que sont le début et la fin du téléchargement d'un fichier.

Une information opérationnelle I est générée à partir d'un évènement caractéristique, d'une combinaison d'événements caractéristiques ou de l'instant auquel ils surviennent. L'information I est transmise au bloc 44 de calcul du mode de fonctionnement courant M.

Le bloc 44 reçoit également l'état courant E de l'avion du sous-module de supervision 27.

A partir de ces deux types de données, le bloc 44 est propre à déterminer la valeur courante du mode de fonctionnement de la passerelle 10. Par exemple, un mode de fonctionnement « en vol » peut être défini lorsque l'état de l'avion est en vol, un autre mode de fonctionnement « au sol » peut être défini lorsque l'état de l'avion est au sol et qu'aucun téléchargement de fichier n'est en cours, et encore un autre mode de fonctionnement « téléchargement » peut être défini lorsque l'état de l'avion est au sol et qu'au moins un téléchargement de fichier est en cours.

Ainsi le bloc 44 délivre en sortie une valeur du mode de fonctionnement courant M.

Le bloc 44 est par exemple exécuté lors de la mise sous tension de la passerelle 10 et de la première exécution du sous-module 40 ; à chaque modification de l'état courant E de l'avion ou de la survenue d'un évènement caractéristique et la génération d'une nouvelle information opérationnelle I ; ou encore en réponse à une demande du sous-module 32 de configuration.

La mémoire de la passerelle 10 comporte une table de configuration 30. La table 30 associe, pour chaque valeur possible du mode de fonctionnement courant M, puis pour chaque canal de communication entre les premier et second réseaux, l'algorithme de sécurité générique à mettre en œuvre, la valeur d'un ou plusieurs paramètres de configuration de cet algorithme, et les ressources nécessaires pour exécuter cet algorithme.

Par exemple la table 30 comporte les champs suivants pour chaque valeur possible du mode de fonctionnement courant et pour chaque canal de communication entre les premier et second réseaux :
- L'adresse réseau de l'origine de ce canal,
- L'adresse réseau du ou des destinataire(s) de ce canal,
- Le protocole utilisé sur ce canal,
- Le débit maximal sur ce canal,
- L'algorithme de sécurité à mettre en œuvre et les valeurs des paramètres intrinsèques de configurations,
- Le temps CPU alloué pour traiter le flux de données transitant sur ce canal,
- La taille de l'espace mémoire allouée pour traiter le flux de données transitant sur ce canal.

Les quatre premiers champs correspondent aux caractéristiques de définition du canal ; la cinquième, aux algorithmes génériques et à leurs paramètres intrinsèques de configuration ; et les sixième et septième, à des paramètres extrinsèques de configuration de la partition d'exécution de l'algorithme configuré.

La passerelle 10 comporte un sous-module 32 de configuration, qui, en fonction de la valeur actuelle du mode de fonctionnement, est propre à lire la table de configuration 30, à extraire de la mémoire les algorithmes génériques indiqués, à les configurer au moyen des paramètres intrinsèques, puis à transmettre les algorithmes configurés au sous-module 34 pour exécution sur des partitions configurées conformément aux paramètres extrinsèques.

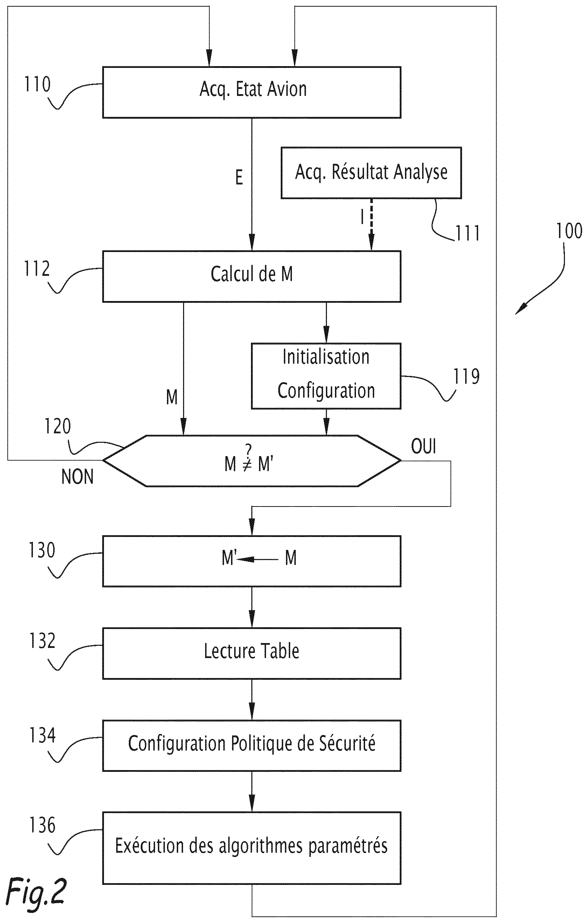

Le procédé de configuration dynamique de la politique de sécurité mis en œuvre par la passerelle 10 va maintenant être présenté plus en détail en référence à la figure 2.

Au cours du fonctionnement de la passerelle 10, le procédé 100 comporte une première série d'étapes, qui sont mises en œuvre par le sous-module 40 d'identification d'une valeur courante M du mode de fonctionnement.

L'exécution du bloc 44 de calcul débute, à l'étape 110, par l'acquisition de l'état courant E de l'avion tel que déterminé par le sous-module 26 de supervision à partir des indicateurs reçus d'autres équipements de l'aéronef.

De préférence, le bloc 44 acquiert également, à l'étape 111, des informations opérationnelles I relatives aux résultats des analyses réalisées par le bloc 42 sur les flux de données des canaux de la liste des canaux à analyser.

A partir de ces informations, à l'étape 112, le bloc 44 détermine une valeur courante M du mode de fonctionnement de la passerelle 10. Cette valeur est passée au sous-module 32 de configuration.

A l'étape 119, le sous-module 32 de configuration est initialisé. Pendant cette étape, le sous-module 32 demande la valeur courante M du mode de fonctionnement au bloc 44. Cette étape permet de resynchroniser les modules 44 et 32. En effet, des changements de mode de fonctionnement pourraient être perdus si ils sont envoyés avant le démarrage (ou pendant un redémarrage) du sous-module 32.

A l'étape 120, le sous-module de configuration 32 compare la valeur courante M du mode de fonctionnement calculée par le sous-module 40 à la valeur actuelle M' du mode de fonctionnement qui a été utilisée pour réaliser la configuration actuelle de la passerelle 10.

Si ces deux valeurs sont identiques, cela signifie que le mode de fonctionnement n'a pas évolué. Le procédé 100 s'arrête et reprendra lors d'une nouvelle itération, à l'étape 110, ou à l'étape 119 en cas de redémarrage du sous-module de configuration 32.

Au contraire si ces deux valeurs, M et M', sont différentes, cela signifie que le mode de fonctionnement a évolué et qu'il faut configurer à nouveau la passerelle pour adapter la politique de sécurité à la nouvelle situation opérationnelle.

A l'étape 130, la valeur courante M du mode de fonctionnement, calculée par le bloc 44, est sauvegardée comme valeur actuelle M' du mode de fonctionnement.

Puis, à l'étape 132, le sous-module 32 de configuration lit la table de configuration 30 pour extraire, pour chaque canal et notamment le canal C1 les paramètres qui correspondent à la valeur actuelle M' du mode de fonctionnement.

A l'étape 134, le sous-module 32 configure la politique de sécurité à mettre en œuvre.

Pour un canal donné, le sous-module 32 extrait l'algorithme de sécurité générique indiqué dans la table 30 et le configure avec les paramètres intrinsèques également indiqués dans la table 30.

Pour un canal donné, à partir des paramètres extrinsèques lus dans la table 30, le sous-module 32 indique au système d'exploitation les caractéristiques de la partition dans laquelle devra être exécuté l'algorithme de sécurité venant d'être configuré. Le système d'exploitation adapte alors la configuration de la partition, en utilisant les mécanismes de l'état de l'art.

Enfin à l'étape 136, au cours de l'exécution du sous-module 34, les algorithmes configurés sont exécutés pour la surveillance de tel ou tel canal.

Le système d'exploitation de la passerelle exécute successivement chaque algorithme sur la partition qui lui est allouée.

Ainsi par exemple si, en vol, le canal C1 est caractérisé par la circulation de messages courts et répétitifs de contrôle, alors, lorsque le mode de fonctionnement courant correspond au mode « en vol », la passerelle 10 est configurée dynamiquement pour appliquer une politique de sécurité qui consiste, pour surveiller le canal C1, en l'exécution d'un algorithme de sécurité du type « store and forward ». En effet, les messages étant courts, ils sont répartis sur un petit nombre de paquets. En conséquence, la passerelle 10 peut stocker dans la mémoire l'ensemble des paquets constituant un message, puis, une fois que l'intégralité d'un message a été reçue, le traiter pour vérifier s'il n'est pas corrompu. Dans l'affirmative, les paquets du message sont réémis vers le second réseau et l'équipement destinataire. Un tel traitement n'introduit qu'un retard minimal acceptable dans le flux des données. L'espace mémoire utilisé pour stocker les différents paquets d'un message reste réduit. De plus, un algorithme de sécurité du type « store and forward » est particulièrement bien adapté aux messages répétitifs. Le traitement d'un paquet est réalisé avec une fréquence plus faible. Le temps CPU alloué à cet algorithme peut donc être réduit, libérant du temps CPU pour la surveillance d'autres canaux.

En revanche, en maintenance, le canal C1 peut être utilisé pour télécharger une mise à jour d'un logiciel sur le second équipement. Alors, si le mode de fonctionnement courant correspond au mode « téléchargement », la passerelle 10 est configurée dynamiquement pour appliquer une politique de sécurité qui consiste en l'exécution d'un algorithme de sécurité du canal C1 du type « cut-through » permettant d'éviter d'avoir à stocker sur la passerelle 10 les différents paquets d'un message avant de les réémettre vers le second réseau, ce qui nécessiterait un espace mémoire trop important. Il s'agit donc, par la mise en œuvre de cet algorithme de sécurité particulier, de gagner des ressources mémoires tout en sécurisant le canal C1 durant la maintenance.

L'homme du métier constatera que la passerelle selon l'invention permet de détecter les instants où il est utile d'adapter les mécanismes de sécurité, notamment les instants qui correspondent à une modification de l'état de l'avion, afin d'optimiser la sécurisation de l'installation informatique embarquée à ressources constantes. Pour la surveillance d'un canal donné, les mécanismes de sécurité à appliquer à un instant donné résultent de la sélection d'un algorithme adapté parmi une pluralité d'algorithmes possibles (notamment la configuration d'un algorithme générique) et/ou de la sélection des ressources pour l'exécution d'un algorithme.

Cet ajustement au mieux de la politique de sécurité permet, en retour, une réduction importante des ressources CPU et mémoire, et donc une réduction du coût de la passerelle. Il permet aussi une réduction du poids, et donc une amélioration des performances énergétiques de l'avion et de ce fait son empreinte écologique tout en augmentant la sécurisation.

En variante, la passerelle de sécurité avionique est implémentée, en tout ou partie, par un ou plusieurs composants électroniques de type FPGA ou ASIC, plutôt que par un ordinateur programmé.

Dans le mode de réalisation présenté ci-dessus, l'ensemble des modules fonctionnels sont implémentés au sein d'une passerelle en tant qu'équipement électronique spécifique dédié à l'interconnexion de réseaux de communication avioniques. En variante, ces modules fonctionnels sont implémentés dans un équipement électronique assurant d'autres fonctions avioniques, par exemple dans un commutateur réseau (« switch »), ou bien dans un calculateur connecté à plusieurs réseaux.

## Revendications

1. Passerelle de sécurité avionique (10), propre à établir une interconnexion entre des premier et second réseaux de communication (11, 12) d'une installation informatique embarquée à bord d'un aéronef et à surveiller au moins un canal de communication (C1) défini comme un flux de données échangé, selon un protocole donné, entre un premier équipement émetteur (13) sur le premier réseau de communication et un second équipement destinataire (14) sur le second réseau de communication, **caractérisée en ce que** ladite passerelle est propre à adapter dynamiquement la politique de sécurité du canal de communication en mettant en œuvre, à l'instant courant, une politique de sécurité qui dépend d'un mode de fonctionnement courant (M) de la passerelle de sécurité, la passerelle de sécurité comportant :
- une table de configuration (30), qui associe, pour chaque mode de fonctionnement courant (M) possible, et pour chaque canal de communication à surveiller, la politique de sécurité à mettre en œuvre, en indiquant un algorithme de sécurité générique à mettre en œuvre, une valeur d'au moins un paramètre de configuration dudit algorithme générique et des ressources nécessaires pour exécuter ledit algorithme générique une fois configuré ;
- un bloc (42) d'analyse du flux de données sur ledit canal, propre à déterminer la survenue d'un évènement caractéristique ; et,
- un bloc (44) de calcul propre à calculer le mode de fonctionnement courant à partir d'un état courant (E) de l'aéronef et d'une information opérationnelle (I) correspondant à la survenue dudit événement caractéristique.

2. Passerelle de sécurité avionique (10) selon la revendication 1, dans laquelle la politique de sécurité mise en œuvre à l'instant courant consiste à exécuter au moins un algorithme de sécurité, ledit algorithme de sécurité résultant de la configuration d'un algorithme générique au moyen d'une valeur d'au moins un paramètre de configuration, dit intrinsèque.

3. Passerelle de sécurité avionique (10) selon l'une quelconque des revendications 1 ou 2, dans laquelle la politique de sécurité mise en œuvre à l'instant courant consiste à exécuter au moins un algorithme de sécurité, ledit algorithme de sécurité étant exécuté sur une partition spatiale et temporelle dédiée qui est configurée au moyen d'une valeur d'au moins un paramètre de configuration, dit extrinsèque.

4. Passerelle de sécurité avionique (10) selon l'une quelconque des revendications 1 à 3, dans laquelle la table de configuration comporte, pour chaque canal :
- L'adresse réseau de l'origine dudit canal,
- L'adresse réseau du ou des destinataire(s) dudit canal,
- Le protocole utilisé sur ledit canal
- Le débit maximal sur ledit canal,
- L'algorithme de sécurité à mettre en œuvre et la valeur des paramètres de configurations intrinsèques,
- Le temps de calcul alloué pour traiter le flux de données transitant sur ledit canal,
- La taille de l'espace mémoire allouée pour traiter le flux de données transitant sur ledit canal.

5. Passerelle de sécurité avionique (10) selon l'une quelconque des revendications 1 à 6, comportant un sous-module de supervision destiné à recevoir des informations externes provenant d'une interface de l'aéronef à laquelle est connectée la passerelle, le sous-module de supervision étant propre à déterminer l'état courant de l'aéronef à partir desdites informations externes.

6. Passerelle de sécurité avionique (10) selon l'une quelconque des revendications 1 à 5, dans laquelle, dans un premier mode de fonctionnement courant correspondant à un état « en vol » de l'aéronef, une première politique de sécurité est mise en œuvre et dans un second état courant correspondant à un état « téléchargement » de l'aéronef, une seconde politique de sécurité est mise en œuvre par ladite passerelle.

7. Passerelle de sécurité avionique (10) selon la revendication 6, dans laquelle, dans le premier mode de fonctionnement un algorithme générique du type « store and forward » est utilisé et dans le second mode de fonctionnement un algorithme générique du type « cut-through » est utilisé.

8. Passerelle de sécurité avionique (10) selon l'une quelconque des revendications 1 à 7, dans lequel l'algorithme générique est un algorithme « Data Origin Authentication HMAC » ou un algorithme « Authenticated Encryption ».

9. Aéronef comportant une installation informatique embarquée comportant des premier et second réseaux de communication (11, 12) et une passerelle de sécurité avionique propre à établir une interconnexion entre les premier et second réseaux de communication et à surveiller au moins un canal de communication (C1) défini comme un flux de données échangé, selon un protocole donné, entre un premier équipement émetteur (13) sur le premier réseau de communication et un second équipement destinataire (14) sur le second réseau de communication, **caractérisé en ce que** ladite passerelle de sécurité avionique est une passerelle de sécurité avionique (10) conforme à l'une quelconque des revendications 1 à 8.

## Patentansprüche

1. Avionik-Sicherheitsgateway (10), das dazu geeignet ist, ein erstes und ein zweites Kommunikationsnetz (11, 12) einer Computeranlage an Bord eines Flugzeugs miteinander zu verbinden und mindestens einen Kommunikationskanal (C1) zu überwachen, der als ein Datenstrom, ausgetauscht gemäß einem gegebenen Protokoll zwischen einer ersten Einrichtung zum Senden (13) im ersten Kommunikationsnetz und einer zweiten Einrichtung zum Empfangen (14) im zweiten Kommunikationsnetz, definiert ist, **dadurch gekennzeichnet, dass** das Gateway geeignet ist, dynamisch die Sicherheitspolitik des Kommunikationskanals anzupassen durch Implementieren, zum aktuellen Zeitpunkt, einer Sicherheitspolitik, die von einem aktuellen Betriebsmodus (M) des Sicherheitsgateways abhängt, wobei das Sicherheitsgateway aufweist:
- eine Konfigurationstabelle (30), die für jeden möglichen aktuelle Betriebsmodus (M) und für jeden zu überwachenden Kommunikationskanal die zu implementierende Sicherheitspolitik zuweist, indem sie einem zu implementierenden Sicherheitsalgorithmus, einen Wert von mindestens einem Konfigurationsparameter des generischen Sicherheitsalgorithmus und zum Ausführen des generischen Algorithmus, wenn er konfiguriert ist, erforderliche Ressourcen angibt;
- einen Block (42) zum Analysieren des Datenstroms auf dem Kanal, der geeignet ist, das Auftreten eines charakteristischen Ereignisses zu ermitteln; und,
- einen Berechnungsblock (44), der geeignet ist, den aktuellen Betriebsmodus ausgehend von einem aktuellen Zustand (E) des Flugzeugs und eine Betriebsinformation (I), die dem Auftreten des charakteristischen Ereignisses entspricht, zu berechnen.

2. Avionik-Sicherheitsgateway (10) nach Anspruch 1, bei dem die derzeit implementierte Sicherheitspolitik darin besteht, mindestens einen Sicherheitsalgorithmus auszuführen, wobei der Sicherheitsalgorithmus aus der Konfiguration eines generischen Algorithmus mittels eines Wertes mindestens eines Konfigurationsparameters, der intrinsisch genannt wird, resultiert.

3. Avionik-Sicherheitsgateway (10) nach einem der Ansprüche 1 oder 2, wobei die derzeit implementierte Sicherheitspolitik darin besteht, mindestens einen Sicherheitsalgorithmus auszuführen, wobei der Sicherheitsalgorithmus auf einer dedizierten räumlichen und zeitlichen Partition ausgeführt wird, die mit Hilfe eines Wertes mindestens eines Konfigurationsparameters, der extrinsisch genannt wird, konfiguriert wird.

4. Avionik-Sicherheitsgateway (10) nach einem der Ansprüche 1 bis 3, wobei die Konfigurationstabelle für jeden Kanal aufweist:
- Die Netzwerkadresse des Ursprungs des Kanals,
- Die Netzwerkadresse des oder der Empfänger(s) des Kanals,
- Das auf dem Kanal verwendete Protokoll
- Der maximale Durchsatz auf dem Kanal,
- Der zu implementierende Sicherheitsalgorithmus und der Wert der intrinsischen Konfigurationsparameter,
- Die Rechenzeit, die für die Verarbeitung des Datenstroms, der durch diesen Kanal fließt, vorgesehen ist,
- Die Größe des Speicherplatzes, der für die Verarbeitung des Datenstroms, der durch diesen Kanal fließt, zugewiesen ist.

5. Avionik-Sicherheitsgateway (10) nach einem der Ansprüche 1 bis 6, aufweisend ein Überwachungs-Untermodul zum Empfangen externer Informationen von einer Schnittstelle des Flugzeugs, mit dem das Gateway verbunden ist, wobei das Überwachungs-Untermodul geeignet ist, dass es den aktuellen Status des Flugzeugs ausgehend von den externen Informationen bestimmt.

6. Avionik-Sicherheitsgateway (10) nach einem der Ansprüche 1 bis 5, wobei in einem ersten aktuellen Betriebsmodus, der einem "Im-Flug"-Zustand des Flugzeugs entspricht, eine erste Sicherheitspolitik implementiert wird und in einem zweiten aktuellen Zustand, der einem "Herunterlade"-Zustand des Flugzeugs entspricht, eine zweite Sicherheitspolitik durch das Gateway implementiert wird.

7. Avionik-Sicherheitsgateway (10) nach Anspruch 6, wobei in dem ersten Betriebsmodus ein generischer Algorithmus vom Typ "Store and Forward" und in dem zweiten Betriebsmodus ein generischer Algorithmus vom Typ "Cut-Through" verwendet wird.

8. Avionik-Sicherheitsgateway (10) nach einem der Ansprüche 1 bis 7, in dem der generische Algorithmus ein "Datenursprungsauthentifizierung-HMAC"-Algorithmus oder ein "Authentifizierte-Verschlüsselung"-Algorithmus ist.

9. Luftfahrzeug mit einer Computeranlage an Bord, die ein erstes und ein zweites Kommunikationsnetz (11, 12) und ein Avionik-Sicherheitsgateway aufweist, das geeignet ist, eine Verbindung zwischen dem ersten und dem zweiten Kommunikationsnetz herzustellen und mindestens einen Kommunikationskanal (C1) zu überwachen, der als ein Datenstrom, ausgetauscht gemäß einem gegebenen Protokoll zwischen einer ersten Einrichtung zum Senden (13) im ersten Kommunikationsnetz und einer zweiten Einrichtung zum Empfangen (14) im zweiten Kommunikationsnetz, definiert ist, **dadurch gekennzeichnet, dass** das Avionik-Sicherheitsgateway ein Avionik-Sicherheitsgateway (10) gemäß einem der Ansprüche 1 bis 8 ist.

## Claims

1. Avionic security gateway (10), capable of establishing an interconnection between first and second communication networks (11, 12) of a computer facility on board an aircraft and of monitoring at least one communication channel (C1) defined as a data stream exchanged, in accordance with a given protocol, between a first transmitting device (13) on the first communication network and a second receiving device (14) on the second communication network, **characterised in that** said gateway is capable of dynamically adapting the security policy of the communication channel by implementing, at the current time, a security policy which depends on a current operating mode (M) of the security gateway, the security gateway comprising:
- a configuration table (30) which associates, for each possible current operating mode (M), and for each communication channel to be monitored, the security policy to be implemented, by indicating a generic security algorithm to be implemented, a value of at least one configuration parameter of said generic algorithm and resources necessary for executing said generic algorithm once configured;
- an analysis block (42) for analysing the data stream on said channel, capable of determining the occurrence of a characteristic event; and
- a computation block (44) capable of computing the current operating mode from a current state (E) of the aircraft and operational information (I) corresponding to the occurrence of said characteristic event.

2. Avionic security gateway (10) according to claim 1, wherein the security policy implemented at the current time consists in executing at least one security algorithm, said security algorithm resulting from the configuration of a generic algorithm by means of a value of at least one configuration parameter, called an intrinsic configuration parameter.

3. Avionic security gateway (10) according to either claim 1 or claim 2, wherein the security policy implemented at the current time consists in executing at least one security algorithm, said security algorithm being executed on a dedicated spatial and temporal partition which is configured by means of a value of at least one configuration parameter, called an extrinsic configuration parameter.

4. Avionic security gateway (10) according to any one of claims 1 to 3, wherein the configuration table comprises, for each channel:
- the network address of the origin of said channel,
- the network address of the recipient(s) of said channel,
- the protocol used on said channel,
- the maximum throughput on said channel,
- the security algorithm to be implemented and the value of the intrinsic configuration parameters,
- the computation time allocated for processing the data stream in transit on said channel,
- the size of the memory space allocated for processing the data stream in transit on said channel.

5. Avionic security gateway (10) according to any one of claims 1 to 6, comprising a supervision sub-module which is to receive external information from an interface of the aircraft to which the gateway is connected, the supervision sub-module being capable of determining the current state of the aircraft from said external information.

6. Avionic security gateway (10) according to any one of claims 1 to 5, wherein, in a first current operating mode corresponding to an "in flight" state of the aircraft, a first security policy is implemented, and in a second current state corresponding to a "download" state of the aircraft, a second security policy is implemented by said gateway.

7. Avionic security gateway (10) according to claim 6, wherein, in the first operating mode, a generic algorithm of the "store and forward" type is used, and in the second operating mode a generic algorithm of the "cut-through" type is used.

8. Avionic security gateway (10) according to any one of claims 1 to 7, wherein the generic algorithm is a "data origin authentication HMAC" algorithm or an "authenticated encryption" algorithm.

9. Aircraft comprising an on-board computer facility comprising first and second communication networks (11, 12) and an avionic security gateway capable of establishing an interconnection between the first and second communication networks and of monitoring at least one communication channel (C1) defined as a data stream exchanged, in accordance with a given protocol, between a first transmitting device (13) on the first communication network and a second receiving device (14) on the second communication network, **characterised in that** said avionic security gateway is an avionic security gateway (10) according to any one of claims 1 to 8.
